# EUROPÄISCHE PATENTANMELDUNG

(11) **EP 2 261 576 A2**
(43) Veröffentlichungstag der Anmeldung: **15.12.2010**
(21) Anmeldenummer: 10005228.1
(22) Anmeldetag: 19.05.2010
(51) Int. Cl.: F24J 2/52

(54) **Befestigungsvorrichtung zur lösbaren Halterung von plattenförmigen Modulen, insbesondere Solarmodulen bzw. Photovoltaikmodulen**

(30) Priorität: 25.05.2009 DE 202009007418 U
(71) Anmelder: WEMEFA Horst Christopeit GmbH, 42555 Velbert (DE)
(72) Erfinder: Rose, Dietmar, 45663 Recklinghausen (DE)
(74) Vertreter: Patentanwälte Buse, Mentzel, Ludewig

(57) **Zusammenfassung**

Die Erfindung betrifft eine Befestigungsvorrichtung zur lösbaren Halterung von plattenförmigen Modulen (10), insbesondere Solarmodulen bzw. Photovoltaikmodulen. Die Halterung erfolgt mittels Klemmprofilen (30), welche die plattenförmigen Module (10) randseitig erfassen und über eine Schraubverbindung an einer darunter liegenden Tragschiene (20) festlegen. Um eine einfache Montage der Module (10) zu ermöglichen, ist für die Schraubverbindung eine Schraubenmutter (50) vorgesehen, die an ihrer Unterseite mit einer Druckfeder (60) verbunden ist (Fig. 1a).

## Beschreibung

Die Erfindung betrifft eine Befestigungsvorrichtung zur lösbaren Halterung von plattenförmigen Modulen, insbesondere Solarmodulen bzw. Photovoltaikmodulen. Die Halterung erfolgt mittels Klemmprofilen, welche die plattenförmigen Module randseitig erfassen und über eine Schraubverbindung an einer darunter liegenden Tragschiene festlegen.

Ein bekanntes Befestigungssystem für Photovoltaikmodule wird in dem Gebrauchsmuster DE 296 16 947 U1 gezeigt. Hier wird ein Profil als Tragschiene verwendet, welches zwei in Längsrichtung des Profils verlaufende hinterschnittene Nuten besitzt. In die obere Nut wird eine Vierkantmutter mit einem Innengewinde seitlich eingeschoben. Diese wird mit einer Befestigungsschraube verbunden, die durch ein Klemmprofil hindurchgeführt wird, welches Photovoltaikmodul hält. Auf diese Weise wird das Photovoltaikmodul auf der Tragschiene festgelegt. Nachteilig an dieser Lösung ist das seitliche Einführen der Vierkantmutter in die längsverlaufende Nut an der Tragschiene, was insbesondere bei langen Tragschienen sehr aufwendig ist.

Eine Verbesserung zeigt das Dokument DE 10 2006 000 089 A1. Hier wird eine rechteckige Mutter verwendet, die zum Einsetzen der Mutter von oben in die hinterschnittene Nut an der Tragschiene geeignet ist. Die Mutter besitzt dafür an ihren beiden Schmalseiten diagonal gegenüberliegende Abschrägungen. Die Maße der Mutter sind so gewählt, dass die Mutter in einer Ausrichtung von oben durch die Aufnahmeöffnung in die Nut eingesetzt werden kann und nach anschließendem Verdrehen in der Nut festlegbar ist. Zusätzlich wird bei der vorgenannten Vorrichtung eine Schraubenfeder verwendet, die mit ihrem unteren Ende an der Mutter und mit ihrem oberen Ende am Klemmprofil festgelegt ist. Die Schraubenfeder verläuft entlang des Schraubenschafts und verhindert im Befestigungsfall, dass sich die Mutter aus ihrer Befestigungsposition verdrehen kann. Nachteilig bei dieser Lösung ist die aufwendig Konstruktion der Verbindung von Klemmprofil, Befestigungsschraube, Mutter und Schraubenfeder. Für unterschiedlich dicke Photovoltaikmodule sind in nachteiliger Weise mehrere Befestigungsvorrichtungen mit unterschiedlich langen Schraubenfedern einzusetzen und zu bevorraten.

Aufgabe der vorliegenden Erfindung ist es, eine gegenüber dem Stand der Technik verbesserte Befestigungsvorrichtung zur lösbaren Halterung von plattenförmigen Modulen aufzuzeigen, die eine einfache Montage der Module ermöglicht.

Diese Aufgabe wird mit einer Befestigungsvorrichtung mit den Merkmalen des Anspruchs 1 gelöst. In ähnlicher Weise wie beim Stand der Technik wird für diese Befestigungsvorrichtung mindestens eine Tragschiene verwendet, welche eine oder mehrere in Längsrichtung der Tragschiene verlaufende hinterschnittene Nuten zur Aufnahme von Verbindungselementen für die Schraubverbindung besitzt. Die obere Nut an der Tragschiene dient der Festlegung der Module. Für die Befestigung an der Tragschiene werden, wie beim Stand der Technik, Klemmprofile verwendet, welche die plattenförmige Module randseitig halten. Die Schraubverbindung zwischen einem Klemmprofil und der darunter liegenden Tragschiene wird mittels einer Befestigungsschraube mit einem Außengewinde und einer Schraubenmutter mit einer mittigen Bohrung mit passendem Innengewinde realisiert. Die Befestigungsschraube wird hierfür durch eine Bohrung am Klemmprofil geführt, die mittig an einem Basissteg des Klemmprofils vorgesehen ist, und mit der Schraubenmutter verbunden.

Die Schraubenmutter besitzt an ihrer Unterseite eine Druckfeder. Die Verbindung zwischen Schraubenmutter und Druckfeder kann durch eine formschlüssige und/oder kraftschlüssige und/oder stoffschlüssige Verbindung erzielt werden. Bei einer vorteilhaften Ausführungsform besitzt die Mutter an ihrer Unterseite eine Ringnut, in der die Feder fest verschlagen ist. Die Druckfeder sorgt dafür, dass im Befestigungsfall die in der Nut einer Tragschiene eingesetzte Schraubenmutter von innen gegen die Stege gedrückt wird, welche die Aufnahmeöffnung der Nut an der Tragschiene begrenzen. Hierzu stützt sich die Druckfeder am Nutboden an der Tragschiene ab. Die Federkraft der Schraubenmutter verhindert im Befestigungsfall ein Verdrehen und Verrutschen der Schraubenmutter innerhalb der Nut. Zur Demontage kann die Schaubenmutter durch Überwindung der Federkraft der Druckfeder bewegt und aus der Nut herausgelöst werden. Diese Demontage kann einerseits durch ein seitliches Herausführen der Schraubenmutter erfolgen. Andererseits bei einer vorteilhaften Ausführungsform der Erfindung ist die Schraubenmutter so ausgestaltet, dass sie in einer Ausrichtung zur Tragschiene von oben in die Aufnahmeöffnung der Nut einsetzbar ist. Bei dieser Ausführungsform ist die Schraubenmutter parallelogrammförmig ausgebildet und an zwei diagonal gegenüberliegenden Ecken abgerundet. Die Breite dieser Schraubenmutter ist kleiner als die Breite der Aufnahmeöffnung der Nut, so dass ein Einsetzen der Schraubenmutter von oben in die Nut leicht möglich ist. Andererseits ist die Gesamtlänge der Schraubenmutter größer als die Breite der Aufnahmeöffnung der Nut, so dass nach dem Einsetzen der Schraubenmutter in die Nut und einem anschließendem Verdrehen der Schraubenmutter ein Befestigungsfall herbeigeführt wird.

Bei einer besonders bevorzugten Ausführungsform der Schaubenmutter wird die Länge der Längsseiten der Schraubenmutter an die Breite der Nut angepasst, vorzugsweise so dass nach dem Verdrehen der Schraubenmutter ausgehend von der eingesetzten Position der Schraubenmutter um ca. 90°, die Nut in ihrer Breite von der Schraubenmutterausgefüllt wird, die Schmalseiten der Schraubenmutter an den Nutwänden anliegen. Für eine solche Ausführungsform wird die Länge der Schmalseiten so gewählt, dass diese Schmalseiten in einem bestimmten Winkel zu den Breitseiten der Schraubenmutter stehen. Durch das gleichzeitige Vorsehen mindestens zwei diagonal gegenüberliegenden abgerundeten Ecken wird das Verdrehen der Schraubenmutter innerhalb der Nut ermöglicht, obwohl die Gesamtlänge der Schraubenmutter größer ist als die Breite der Nut.

Das Vorfixieren der Schraubenmutter nach dem Einsetzen kann des Weiteren durch eine besondere Ausgestaltung der Nut erleichtert werden, nämlich indem der untere Bereich der Nut als Aufnahmebereich für die Druckfeder Schraubenmutter eine kleinere Breite aufweist, als der obere Aufnahmebereich der für die Schraubenmutter vorgesehen ist, so dass nach dem Einsetzen der Schraubenmutter die Druckfeder innerhalb des unteren Aufnahmebereichs der Nut nur ein geringes Spiel besitzt und damit eine Vorpositionierung der Schraubenmutter erfolgt. Die Schraubenmutter wird durch Verdrehen in eine Befestigungsposition gebracht, wo die Enden der Breitseiten unterhalb der die Aufnahmeöffnung begrenzenden Stege gelangt, an die sie dann durch die Federkraft der Druckfeder gedrückt werden. Die Dicke der Schraubenmutter ist beispielsweise so gewählt, dass sie nur geringfügig kleiner ist als die Höhe des oberen Aufnahmebereichs. Die Schraubenmutter benötigt nur ein geringes Spiel für die Drehbewegung. Hierzu muss sich die Höhe des Aufnahmebereichs von der Dicke der Schraubenmutter nur um 1 bis 5 mm unterscheiden. Bevorzugt wird eine Differenz von 2 mm. Die Höhe des unteren Aufnahmebereichs ist wesentlich kleiner als die Länge der Druckfeder im entspannten Zustand, so dass im Befestigungsfall die in dem unteren Aufnahmebereich angeordnete Druckfeder zusammengedrückt wird und so eine starke Federkraft auf die Schraubenmutter ausüben kann.

Im Befestigungsfall greift die durch eine mittige Bohrung am Klemmprofil geführte Befestigungsschraube in die Schraubenmutter ein. Durch das Anziehen der Befestigungsschraube wird das Klemmprofil mit der Tragschiene verspannt. Das U-förmig ausgebildete Klemmprofil besitzt einen unteren Basissteg, in dem sich die mittige Bohrung für die Befestigungsschraube befindet, zwei senkrecht vom Basissteg aufragende Schenkel, an deren freien Enden sich nach außen abragende Haltestege befinden, die vorzugsweise rechtwinklig von den Schenkeln abragen. Diese Haltestege legen sich auf die Oberseiten der benachbart angeordneten Module, wodurch die Module beim Anziehen der mittig am Klemmprofil wirkenden Befestigungsschraube und Verspannen des Klemmprofils mit Tragschiene gemeinsam mit gleicher Kraft niedergedrückt werden und eine Befestigung der Module erzielt wird. Die Befestigungsachse der Befestigungsvorrichtung fällt in diesem Fall mit der Längsachse der Befestigungsschraube zusammen.

Bei einer Solarmodul- oder Photovoltaikmodulanlage werden in der Regel mehrere Module nebeneinander an einer Tragschiene festgelegt. Für Festlegung werden zwei verschiedene Klemmprofile verwendet, nämlich ein mittleres Klemmprofil für eine Klemmverbindung mit zwei Modulen, wie oben beschrieben und ein endseitiges Klemmprofil für das halten eines Moduls. Das endseitige Klemmprofil besitzt vorzugsweise nur an einem Schenkel einen nach außen abragenden Haltesteg, der in gleicher Weise rechtwinklig von dem Schenkel abragt. Um auch im Endbereich, wo die Befestigungsachse der Befestigungsvorrichtung nicht mit der Längsachse der Befestigungsschraube zusammenfällt, eine stabile Halterung zu garantieren, wird zwischen dem Basisstag des endseitigen Klemmprofils und der Tragschiene ein Stützkörper vorgesehen, der das Klemmprofil in einer waagerechten Ausrichtung hält und ein Verkanten des Klemmprofils beim Verspannen des Klemmprofils an der Tragschiene verhindert.

In einer vorteilhaften Ausgestaltung besitzt dieser Stützkörper die gleiche Breite, wie der Basissteg des Klemmprofils. Die Höhe des Stützkörpers richtet sich nach der Dicke der zu befestigenden Module. Die Befestigungsschraube wird beim endseitigen Klemmprofil durch die Bohrung am Klemmprofil anschließend durch eine Durchgangsbohrung oder Aufnahme am Stützkörper geführt, bevor die Befestigungsschraube in die Schraubenmutter eingreift.

Bei einer besonders bevorzugten Ausführungsform wird der Basissteg des endseitigen Klemmprofils an der Unterseite keilförmig ausgebildet. Die keilförmige Ausbildung der Unterseite bedeutet eine zunehmende Dicke des Basisstegs, ausgehend von dem Schenkel, an dem das Modul anliegt, bis zum außenliegenden Schenkel, wobei die zunehmende Dicke ausschließlich die Unterseite des Basisstegs verändert, die Oberseite des Basissteges ist waagerecht. Dies führt durch die unmittelbare Anlage des Stützkörpers an der Unterseite des Klemmprofils dazu, dass das Klemmprofil in Richtung des Moduls verspannt wird.

Auch wenn der Stützkörper bereits durch die Befestigungsschraube und/oder durch die keilförmige Ausbildung der Unterseite des Basisstegs vorfixiert ist, so kann durch das Vorsehen eines Klemmstegs an der Außenseite des endseitigen Klemmprofils, der nach unten gerichtet ist und den Basissteg nach unten überragt, ein Verdrehen des Stützkörpers bei der Montage verhindern. Ein solcher Klemmsteg kann mit dem Klemmprofil über eine formschlüssige und/oder kraftschlüssige Verbindung verbunden sein, vorzugsweise ist dieser Klemmsteg jedoch am Klemmprofil angeformt und einstückig mit dem Klemmprofil ausgebildet.

Die Tragschiene, die Klemmprofile und der Stützkörper bestehen aus Metall oder Kunststoff, vorzugsweise Aluminium. Die Tragschiene ist vorzugsweise eine stranggepresste Profilschiene. In einer vorteilhaften Ausführungsform kann gegenüberliegend zur ersten Nut an der Tragschiene eine weitere hinterschnittene Nut an der Unterseite der Tragschiene vorgesehen werden, die zur Festlegung der Tragschiene an einer Unterkonstruktion dient. Eine solche Unterkonstruktion kann Teil einer Dachkonstruktion zur Anordnung der Module auf einem Schrägdach sowie einem Flachdach oder eine freistehende Konstruktion für beispielsweise eine Solaranlage bzw. Photovoltaikanlage sein. Bei den plattenförmigen Modulen handelt es sich vorzugsweise um Solarmodule bzw. Photovoltaikmodule, die gerahmt oder ungerahmt in Standardmaßen eingesetzt werden. Für die Befestigung an der Tragschiene werden, wie beim Stand der Technik, Klemmprofile verwendet, welche die plattenförmige Module randseitig halten, indem sie mit einem Haltesteg die Module umgreifen und beim Festlegen der Klemmprofile an der Tragschiene die Module auf die Tragschiene ziehen. Um bei diesem Niederhalten der Module, insbesondere bei ungerahmten Modulen, Beschädigungen zu verhindern, können die Haltestege der Klemmprofile an ihrer Unterseite mit Dichtungen versehen sein.

Die Erfindung offenbart eine sehr einfache Modulbefestigung. Durch Verwendung einer Schraubenmutter mit einer an der Unterseite angeordneten Druckfeder wird ein einfaches Vorfixieren der Schraubenmutter innerhalb der Nut realisiert, in einfachster Weise mittels einer Vierkantmutter, die seitlich in eine Nut eingeführt wird. Durch die besondere parallelogrammförmige Ausgestaltung der Schaubenmutter mit ausgewählten und auf die Größe der Nut und Aufnahmeöffnung abgestimmten Maßen lässt sich diese Schraubenmutter auch von oben in die Nut einsetzen. Diese Befestigungsvorrichtung hat zudem den Vorteil die Befestigungsvorrichtung aus Klemmprofil, Befestigungsschraube und Schraubenmutter sowie gegebenenfalls Stützkörper vormontiert werden können und nur eine geringe Anzahl verschienener Bauteile bevorratet werden muss. Für unterschiedliche dicke Module sind ausschließlich die Befestigungsschrauben und die endseitigen Stützkörper auszutauschen. Sämtliche andere Verbindungsmittel können in gleicher Weise eingesetzt werden.

Die Erfindung wird nachstehend anhand zweier Ausführungsbeispiele näher erläutert. Es zeigen:
- Fig. 1a:: Seitenansicht einer erfindungsgemäßen Befestigungsvorrichtung zum Halten zweier Module,
- Fig. 1b:: Vorderansicht der Befestigungsvorrichtung gemäß Fig. 1a,
- Fig. 2a:: Seitenansicht der erfindungsgemäßen Befestigungsvorrichtung zum Halten eines Moduls,
- Fig. 2b:: Vorderansicht der Befestigungsvorrichtung gemäß Fig. 2a,
- Fig. 3a:: Seitenansicht eines Klemmprofils,
- Fig. 3b:: Draufsicht auf das Klemmprofil gemäß Fig. 3a,
- Fig. 4:: Seitenansicht eines endseitigen Klemmprofils,
- Fig. 5:: Seitenansicht der Tragschiene,
- Fig. 6a:: Schnitt durch eine Schraubenmutter mit Druckfeder,
- Fig. 6b:: Ansicht der Schraubenmutter gemäß Fig. 6a von unten.

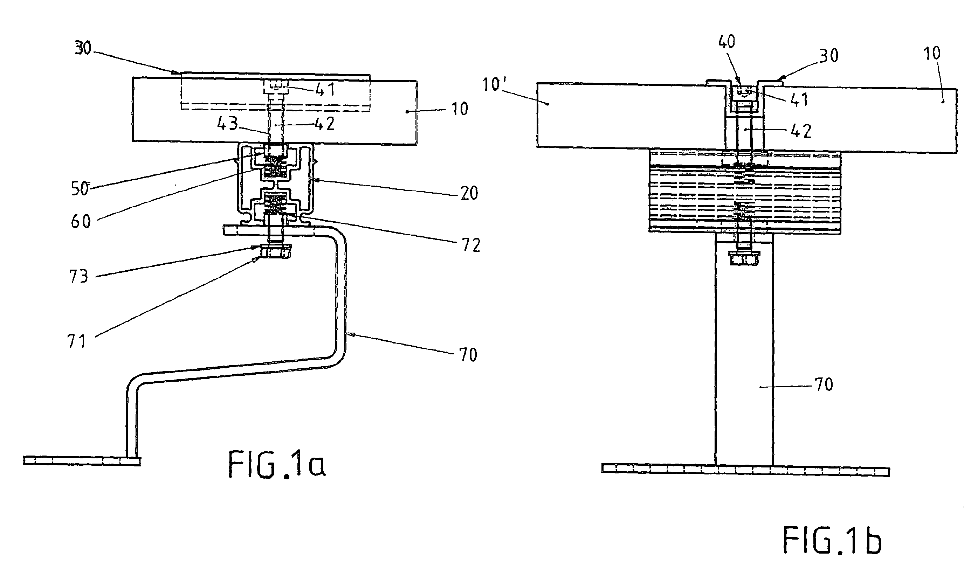

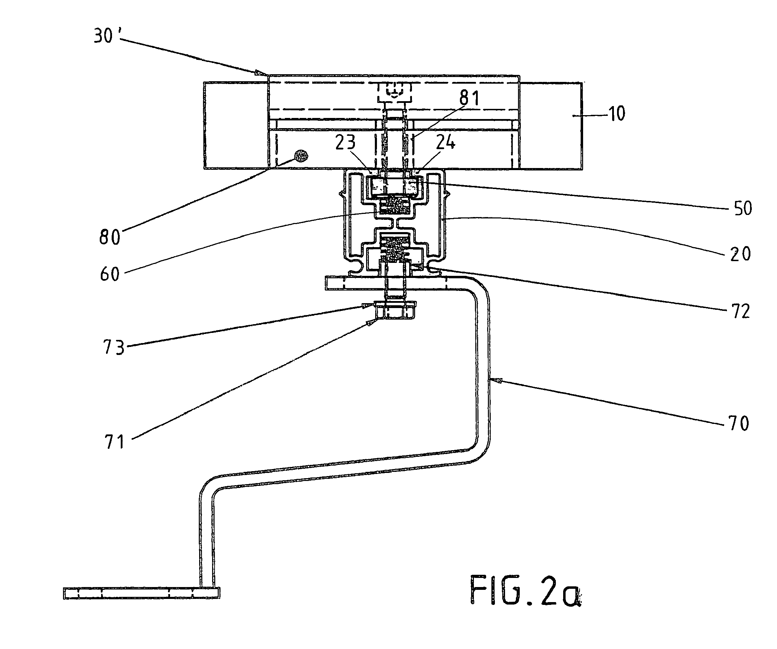

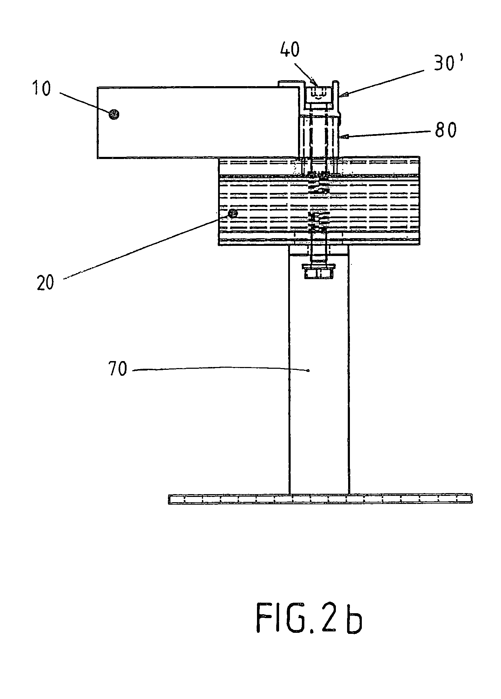

Die Fig. 1a, 1b, 2a, 2b zeigen die Befestigung von plattenförmigen Modulen 10, 10', insbesondere von Solarmodulen oder Photovoltaikmodulen. Diese Module 10, 10' liegen auf einer Tragschiene 20 auf und sind über Klemmprofile 30, 30', welche die Module 10, 10' randseitig übergreifen, mittels einer Schraubverbindung an der Tragschiene 20 festgelegt. Die vorgenannte Konstruktion lässt sich auf einem Schräg- oder Flachdach anordnen oder an einer freistehenden Konstruktion. In den Fig. 1a, 1b, 2a, 2b ist die Verbindung mit einem Dachhaken 70 gezeigt, der ebenfalls über eine Schraubverbindung mit der Tragschiene 20 verbunden ist. Hierzu greift eine Schraube 71 in eine Schraubmutter 72 ein, die in einer unteren Nut 21' der Tragschiene 20 aufgenommen ist. Wird die Schraube 71, in diesem Fall eine Sechskantschraube, angezogen, legt sich der Kopf der Schraube 71 zusammen mit einer Unterlegscheibe 73 am Dachhaken 70 an und die Schraube 71 verspannt die Tragschiene 20 mit dem darunter angeordneten Dachhaken 70. In gleicher Weise kann eine Verbindung zu einer beliebigen Unterkonstruktion vorgenommen werden. Vorteilhafterweise können zur Festlegung der Dachhaken 70 und zur Festlegung der Module10, 10' die gleichen Schraubenmuttern 50, 72 verwendet werden.

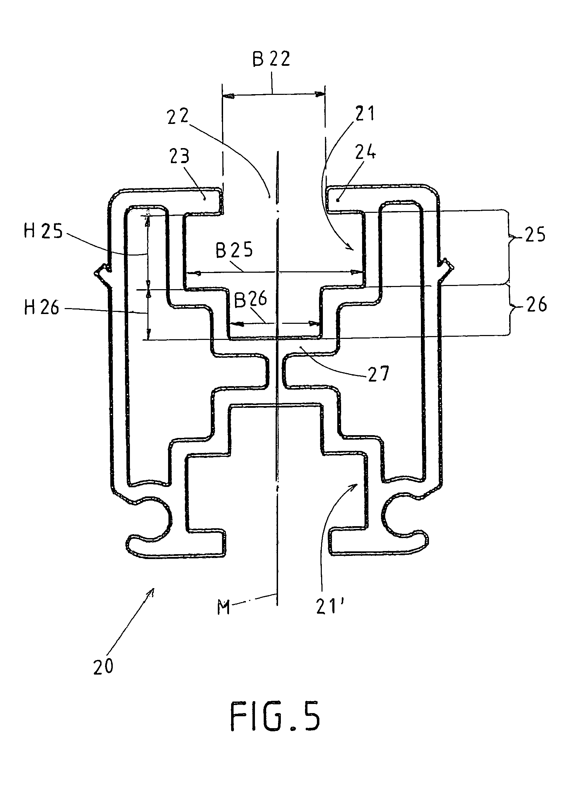

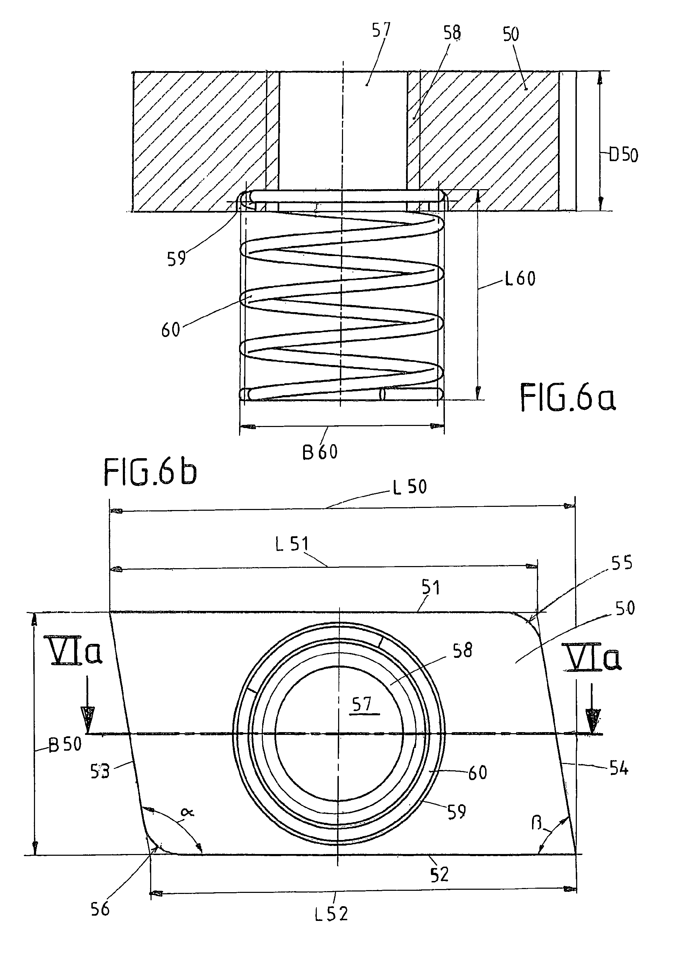

Die Tragschiene 20, die besser aus der Fig. 5 zu ersehen ist, zeigt einen spiegelsymmetrisch zur Mittelachse M vorgesehenen Aufbau. Eine untere Nut 21' ist für die Aufnahme der Verbindungselemente zur Festlegung an der Unterkonstruktion vorgesehen und die obere Nut 21 zur Aufnahme der Verbindungsmittel für die Befestigung der Module 10, 10' an der Tragschiene 20. Die Nuten 21, 21' sind gleichgestaltete hinterschnittene Nuten, nachfolgend wird die Ausgestaltung der Nut 21 beschrieben. Die Aufnahmeöffnung 22 wird durch Stege 23, 24 begrenzt. Des Weiteren unterteilt sich der Aufnahmebereich der Nut 21 in einen oberen Aufnahmebereich 25 und einen unteren Aufnahmebereich 26. Der obere Aufnahmebereich 25 dient der Aufnahme der Schraubenmutter 50 und der untere Aufnahmebereich 26 der Aufnahme der Druckfeder 60. Die mit der Druckfeder 60 verbundene Schraubenmutter 50 ist besser den Fig. 6a und 6b zu entnehmen. Die Schraubenmutter 50 besitzt an ihrer Unterseite eine ringförmige Aufnahme 59 für die Druckfeder 60. Die Druckfeder 60 ist mit der Schraubenmutter 50 fest verschlagen. Die Druckfeder 60 findet nach dem Einsetzen der Schraubenmutter in die Nut 21 Aufnahme in dem unteren Aufnahmebereich 26 und die Schaubenmutter 50 im oberen Aufnahmebereich 25. Da die Länge L60 der Druckfeder 60 wesentlich größer ist als die Höhe H26 des unteren Aufnahmebereichs 26, übt die Druckfeder 60 nach dem Einsetzen der Schraubenmutter 50 in die Nut 21 in der zusammengedrückten Form eine Federkraft auf die Schraubmutter 50 aus. Diese Federkraft dient dazu, die im oberen Aufnahmebereich 25 eingesetzte Schraubenmutter 50 von innen gegen die die Aufnahmeöffnung 22 begrenzenden Stege 23, 24 zu drücken, um ein Verdrehen der Schraubenmutter 50 in dieser Befestigungslage zu verhindern. Die in den Fig. 6a, 6b gezeigte parallelogrammförmige Schraubenmutter 50 kann von oben durch die Aufnahmeöffnung 22 in die Nut 21 der Tragschiene eingesetzt werden, da die Schraubenmutter 50 eine geringere Breite B50 im Vergleich zur Breite B22 der Aufnahmeöffnung 22 besitzt. Die Druckfeder 60 findet Aufnahme in dem unteren Aufnahmebereich 26, der in seiner Breite B26 nur geringfügig breiter als die Breite B60 der Druckfeder 60 ist. Die Maße der Schraubenmutter 50 sind des Weiteren so gewählt, dass die Schraubenmutter 50 nach dem Einsetzen in die Nut 21 in eine Befestigungslage überführt werden kann und Aufnahme im oberen Aufnahmebereich 25 findet. Hierzu ist eine gewisse Kraft auszuüben, da die in dem unteren Aufnahmebereich eingesetzte Druckfeder 60 zusammengedrückt werden muss. Die Schraubenmutter 50 besitzt zwei Schmalseiten parallele 53, 54 und zwei parallele Breitseiten 51, 52. Zusätzlich sind an zwei diagonal gegenüberliegenden Ecken 55, 56 Abrundungen vorgesehen. Durch Verdrehen der eingesetzten Schraubenmutter 50 gelangen die Ränder der Schmalseiten 53, 54 unter die Stege 23, 24, die die Aufnahmeöffnung 22 der Nut 21 begrenzen. Nach dem Verdrehen befindet sich die Schraubenmutter 50 in der Befestigungsposition, wo sie in diesem Beispiel den oberen Aufnahmebereich 25 der Nut 21 in dessen Breite B25 ausfüllt, da die Längen L51 und L52 der Breitseiten 51, 52 der Schraubenmutter 50 mit der Breite B25 des oberen Aufnahmebereichs 25 der Nut 21 übereinstimmen. Das Verdrehen der Schraubenmutter 50 aus der Montageposition in die Befestigungsposition wird durch die Parallelogrammform, die abgerundeten Ecken und die gewählten Längen der Schmalseiten 53 54 möglich. Bei der in diesem Ausführungsbeispiel gezeigten Schraubenmutter 50 ist die Schmalseite 53 in einem Winkel α von 100° zur Längsseite 52 ausgerichtet und die Schmalseite 54 in einem Winkel β von 80° zur Längsseite 52. Da die Befestigungsachse der Befestigungsvorrichtung durch die Mittelachse M der Tragschiene 20 geht und die Bohrung 57 mit dem Innengewinde 58 an der Schaubenmutter 50 mittig vorgesehen ist, verändert sich die Position der Bohrung 57 bei Verdrehen der Schraubenmutter 50 nicht. In diesem Ausführungsbeispiel ist die Höhe H25 der oberen Aufnahme 25 nur geringfügig größer als die Dicke D50 der Schraubenmutter 50. Die Differenz beträgt 2 mm. Diese Differenz ist ausreichend, um Maßtoleranzen der einzusetzen Schraubenmuttern 50 oder der Tragschienen 20 auszugleichen. Andererseits ist sie klein genug, um unnötige Verkantungen der Schaubenmutter 50 beim Verdrehen zu verhindern.

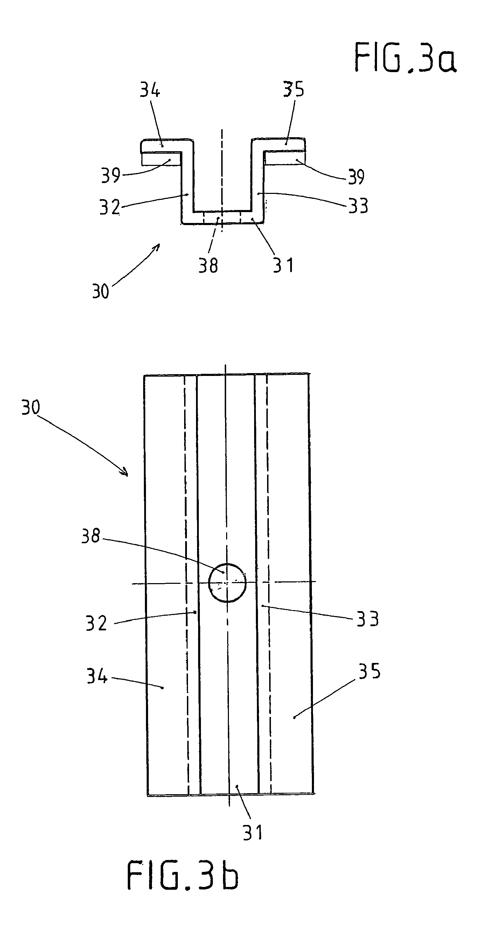

Zur Montage der Module 10, 10' an der Tragschiene 20 werden diese auf die Tragschiene 20 aufgelegt. Zwischen zwei benachbarten Modulen 10, 10' wird das Klemmprofil 30 eingefügt und zwar so, dass sich die Schenkel 32, 33 stirnseitig an die Ränder der Module 10, 10' anlegen und die endseitig an den Schenkeln 32, 33 vorgesehenen senkrecht abragenden Haltestege 34, 35 auf die Oberseite der Module 10, 10' auflegen. Die Schenkel 32, 33 sind über einen Basissteg 31 miteinander verbunden, wie am besten aus Fig. 3a, 3b zu ersehen ist. In diesem Basissteg 31 ist mittig eine Durchgangsbohrung 38 für die Befestigungsschraube 40 angeordnet. Zusätzlich können an der Unterseite der Haltestege 34, 35 Dichtungen 39 aufgeklebt werden, die insbesondere bei der Verwendung von Glasmodulen ohne Rahmen einen unmittelbaren Kontakt des Metalls mit den Modulen 10, 10' verhindern. Eine solche Dichtung 39 kann auch als Hülle auf die Haltestege aufgesetzt werden oder anvulkanisiert werden. Das zwischen den Modulen 10, 10' in Position gebrachte Klemmprofil 30 ist bereits mit der Befestigungsschraube 40 versehen, d.h. die Befestigungsschraube 40 ist mit ihrem Schraubenschaft 42 durch die Bohrung 38 am Basissteg 31 des Klemmprofils 30 hindurchgeführt und das Ende des Schraubenschaftes 42 ist mit der Schraubenmutter 50 verbunden. Diese Verbindung wird durch ein passendes Außengewinde 43 am Schraubenschaft 42 der Befestigungsschraube 40 zum Innengewinde 58 der Bohrung 57 der Schaubenmutter 50 möglich. Das so vorbereitete Klemmprofil 30 mit der Befestigungsschraube 40 und der Schraubenmutter 50 wird nun mit der Tragschiene 20 verbunden, indem der Schraubenkopf 41 der Befestigungsschraube, in diesem Fall eine Zylinderkopfschraube darstellt, soweit verdreht wird, dass die Schraubenmutter 50 so ausgerichtet ist, dass sie in die Aufnahmeöffnung 22 der Nut 21 an der Tragschiene 20 eingesetzt werden kann. Nach dem Einsetzen der Schraubenmutter 50 wird diese durch Verdrehung der Befestigungsschraube 40 in ihre Befestigungsposition bewegt und verspannt. Ein Weiterdrehen der Schraubenmutter 50 ist aufgrund der zwei nicht abgerundeten Ecken an der Schraubenmutter 50 nicht möglich. Ein Weiterdrehen der Befestigungsschraube 40 am Schraubenkopf 41 führt zum Verspannen des Klemmprofil 30 und damit zu einem festen Aufliegen der Haltestege 34, 35 an der Oberseite der Module 10, 10'. Der besondere Vorteil der erfindungsgemäßen Befestigungsvorrichtung besteht darin, dass das Klemmprofil 30 zusammen mit der Befestigungsschraube 40 und der Schraubenmutter 50, die mit der Druckfeder 60 verbunden ist, vormontiert werden kann und dann vor Ort mit wenigen Handgriffen das Modul 10, 10' an der Tragschiene 20 montierbar ist.

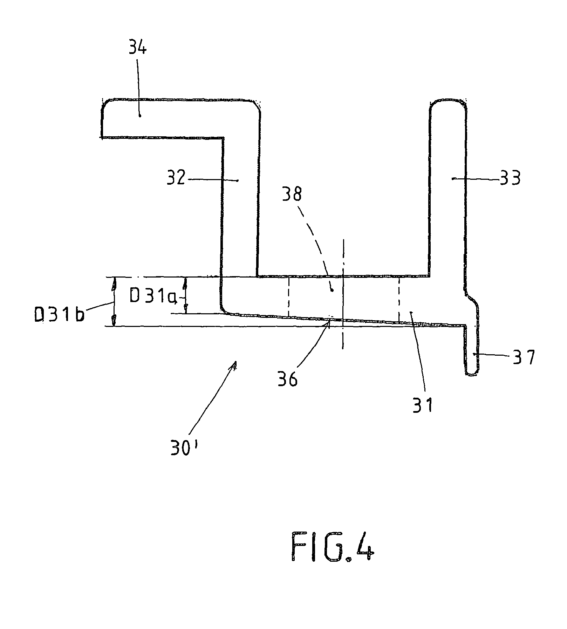

Eine weitere Ausführungsform der erfindungsgemäßen Befestigungsvorrichtung ist den Fig. 2a und 2b zu entnehmen. Gleiche Bezugszeichen stellen gleiche Bauteile dar. Im Unterschied zu der Befestigungsvorrichtung gemäß den Fig. 1a und 1b wird in den Fig. 2a, 2b ausschließlich ein Modul 10 an der Tragschiene 20 befestigt. Hierzu wird ebenfalls ein Klemmprofil 30', eine Befestigungsschraube 40 und eine Schraubenmutter 50 verwendet. Die Befestigungsvorrichtung unterscheidet sich in der Ausgestaltung des endseitigen Klemmprofils 30' und in der Verwendung eines Stützkörpers 80. Das Klemmprofil 30' ist besser der Fig. 4 zu entnehmen. Es besitzt einen Basissteg 31 mit einer mittigen Bohrung 38. Von diesem Basissteg 31 ragen zwei Schenkel 32, 33 ab, wobei es zur Halterung des Moduls 10 ausreichend und vorteilhaft ist, dass nur ein Haltesteg 34 vorgesehen ist, der senkrecht vom Ende des Schenkels 32 abragt. Anders als beim Klemmprofil 30, das mit seinen Haltestegen 34, 35 gleichmäßig zwei Module 10, 10' durch die Schraubverbindung auf die Tragschiene 20 zieht, wird mit dem Klemmprofil 30' nur die Halterung eines Moduls 10 vorgenommen. Da der Basissteg 31 des Klemmprofils 30' nicht auf der Tragschiene 20 aufliegt, würde eine Schraubverbindung mit der Tragschiene 20 nicht zu einer sicheren Festlegung des Moduls 10 führen. Durch die Verwendung des Stützkörpers 80, der zwischen der Tragschiene 20 und dem Klemmprofil 30' vorgesehen wird, wird das Klemmprofil 30' von unten abgestützt. Bei diesem Stützkörper 80 kann es sich um einen Kunststoffklotz mit einer Durchgangsbohrung für die Befestigungsschraube 40 handeln oder wie in diesem Beispiel um ein Metallprofil, nämlich eine C-förmige Metallschiene. Die zwei kurzen Abbiegungen stellen die vordere und hintere Begrenzungsfläche dar, die in ihrer Breite mit der Breite des Basisstegs 31 übereinstimmen und die Seitenfläche verläuft in Verlängerung des außenliegenden Schenkels 33 des Klemmprofils 30', so dass eine geschlossenen Außenfläche erzielt wird. An der Innenseite der C-förmigen Metallschiene ist eine Buchse mit einer Durchgangsbohrung 81 angeformt, durch welche die Befestigungsschraube 40 verläuft. Die Montage dieser Befestigungsvorrichtung erfolgt in gleicher Weise wie beim vorhergehenden Ausführungsbeispiel. Die Befestigungsschraube 40 wird durch die Bohrung 38 am Klemmprofil 30' und die Durchgangsbohrung 81 am Stützkörper 80 geführt und endseitig mit der Schraubenmutter 50 verbunden, die an der Unterseite mit der Druckfeder 60 verbunden ist. Die Schraubenmutter 50 wird in die Nut 21 an der Tragschiene 20 eingesetzt, eingedrückt und mittels der Befestigungsschraube 40 verdreht. Dann wird durch weiteres Anziehen der Befestigungsschraube 40 der Haltesteg 34 auf die Oberseite des Moduls 10 gezogen und schließlich das Modul 10 an der Tragschiene 20 verspannt. Der Haltesteg 34 kann selbstverständlich in gleicher Weise mit einer Dichtung 39 versehen sein.

Damit sich der Stützkörper 80 bei dem Montagevorgang nicht verdreht, ist am Klemmprofil 30' an der vom Modul 10 abweisenden Außenseite ein Klemmsteg 37 vorgesehen, der den Basissteg 31 nach unten überragt. Dieser Klemmsteg 37 ist an der Außenseite des Schenkels 33 angeformt.

Zusätzlich ist bei dem Klemmprofil 30' der Basissteg 31 keilförmig ausgebildet. Die Oberseite des Basisstegs 31 ist waagerecht ausgerichtet und die Unterseite 36 des Basisstegs 31 besitzt eine nach außen hin zunehmende Dicke, d.h. die geringste Dicke D31a des Basisstegs 31 ist im Bereich des Schenkels 32 vorgesehen und die maximale Dicke D31b im Bereich des Schenkels 33. Diese keilförmige Ausbildung des Basisstegs 31 führt dazu, dass der Haltesteg 34, obwohl die Befestigungsschraube 40 benachbart zum Haltesteg 34 angeordnet ist, beim Verspannen zusätzlich in Richtung Modul 10 gedrückt wird und damit eine sichere Halterung des Moduls 10 garantiert ist.

Bei dem Klemmprofil 30' wird der Schenkel 33 für eine Modulbefestigung nicht benötigt. Das Vorsehen dieses Schenkels 33 kann einer Diebstahlsicherung dienen, da es bei einer diebstahlsicheren Ausführung des Schraubenkopfs 41 das seitlichen Angreifen eines Werkzeuges zum Lösen der Befestigungsschraube 40 verhindert.

### Bezugszeichenliste

- 10, 10': Modul

- 20: Tragschiene
- 21, 21': Nut
- 22: Aufnahmeöffnung
- 23: Steg
- 24: Steg
- 25: obere Aufnahmebereich
- 26: untere Aufnahmebereich
- 27: Nutboden

- 30, 30': Klemmprofil
- 31: Basissteg
- 32: Schenkel
- 33: Schenkel
- 34: Haltesteg
- 35: Haltesteg
- 36: Unterseite
- 37: Klemmsteg
- 38: Bohrung
- 39: Dichtung

- 40: Befestigungsschraube
- 41: Schraubenkopf
- 42: Schraubenschaft
- 43: Außengewinde

- 50: Schraubenmutter
- 51: Breitseite
- 52: Breitseite

- 53: Schmalseite
- 54: Schmalseite
- 55: Ecke
- 56: Ecke
- 57: Bohrung
- 58: Innengewinde
- 59: Aufnahme

- 60: Druckfeder

- 70: Dachhaken
- 71: Schraube
- 72: Schraubmutter
- 73: Unterlegscheibe

- 80: Stützkörper
- 81: Durchgangsbohrung

- B22: Breite von 22
- B25: Breite von 25
- B26: Breite von 26
- B50: Breite von 53, 54
- B60: Breite von 60
- D31a: minimale Dicke Basissteg
- D31 b: maximale Dicke Basissteg
- D50: Dicke 50
- H25: Höhe von 25
- H26: Höhe von 26
- L50: Gesamtlänge 50
- L51: Länge von 51
- L52: Länge von 52
- L60: Länge der Druckfeder

- M: Mittelachse
- α: Winkel zwischen52 und 53
- β: Winkel zwischen 52 und 54

## Patentansprüche

1. Befestigungsvorrichtung zur lösbaren Halterung von plattenförmigen Modulen (10, 10'), insbesondere Solarmodulen bzw. Photovoltaikmodulen,
mit Klemmprofilen (30, 30') zum randseitigen Niederhalten der plattenförmigen Module (10, 10'),
mit mindestens einer Tragschiene (20), welche mindestens eine in Längsrichtung der Tragschiene (20) verlaufende hinterschnittene Nut (21) besitzt sowie
mit einer Befestigungsschraube (40) mit einem Außengewinde (43) und mit einer Schraubenmutter (50) mit einer mittigen Bohrung (57) mit passendem Innengewinde (58) für Schraubverbindungen zwischen jeweils einem Klemmprofil (30, 30') und der Tragschiene (20),
wobei die Schraubenmutter (50) im Befestigungsfall in der Nut (21) der Tragschiene (20) lösbar gehalten ist,
wobei die Befestigungsschraube (40) lösbar am Klemmprofil (30, 30') angeordnet und mit der Schraubenmutter (50) verbunden ist,
**dadurch gekennzeichnet,**
**dass** die Schraubenmutter (50) an ihrer Unterseite mit einer Druckfeder (60) verbunden ist und
**dass** im Befestigungsfall sich die Druckfeder (60) am Nutboden (27) der Nut (21) abstützt und durch ihre Federkraft die Schraubenmutter (50) von innen gegen die Stege (23, 24) drückt, welche die Aufnahmeöffnung (22) der Nut (21) an der Tragschiene (20) begrenzen,
**dass** zur Demontage die Schraubenmutter (50) durch Überwindung der Federkraft der Druckfeder (60) bewegbar und aus der Nut (21) lösbar ist.

2. Befestigungsvorrichtung nach Anspruch 1, **dadurch gekennzeichnet, dass** die Schraubenmutter (50) parallelogrammförmig ausgebildet ist mit mindestens zwei diagonal gegenüberliegenden abgerundeten Ecken (55, 56), wobei die Breite (B50) der Schraubenmutter (50) kleiner ist als die Breite (B22) der Aufnahmeöffnung (22) der Nut (21) und die Gesamtlänge (L50) der Schraubenmutter (50) größer ist als die Breite (B22) der Aufnahmeöffnung (22) der Nut (21).

3. Befestigungsvorrichtung nach Anspruch 1 oder 2, **dadurch gekennzeichnet, dass** die Nut (21) der Tragschiene (20) einen oberen Aufnahmebereich (25) für die Schraubenmutter (50) und einen darunter angeordneten Aufnahmebereich (26) für die Druckfeder (60) besitzt, wobei die Dicke (D50) der Schraubenmutter (50) kleiner ist als die Höhe (H25) des oberen Aufnahmebereichs (25) der Nut (21), vorzugsweise um 1 bis 5 mm, besonders bevorzugt um 2mm und wobei die Höhe (H26) des unteren Bereichs der Nut (21) kleiner ist als die Länge (L60) der Druckfeder (60) im entspannten Zustand.

4. Befestigungsvorrichtung nach einem der Ansprüche 1 bis 3, **dadurch gekennzeichnet, dass** das Klemmprofil (30, 30') u-förmig ausgebildet ist und im unteren Basissteg (31) eine mittige Bohrung (38) für die Aufnahme der Befestigungsschraube (40) besitzt.

5. Befestigungsvorrichtung nach Anspruch 4, **dadurch gekennzeichnet, dass** ein mittleres Klemmprofil (30) für eine Klemmverbindung mit zwei Modulen (10, 10') an den freien Enden der nach oben gerichteten Schenkel (32, 33) nach außen abragende Haltestege (34, 35) besitzt, wobei diese vorzugsweise rechtwinklig von den Schenkeln (32, 33) abragen.

6. Befestigungsvorrichtung nach Anspruch 4, **dadurch gekennzeichnet, dass** ein endseitiges Klemmprofil (30') für eine Klemmverbindung mit einem Modul (10) an dem freien Ende eines Schenkels (32) einen nach außen abragenden Haltesteg (34) besitzt, wobei dieser vorzugsweise rechtwinklig von dem Schenkel (32) abragt.

7. Befestigungsvorrichtung nach Anspruch 6, **dadurch gekennzeichnet, dass** zwischen dem Basissteg (31) des endseitigen Klemmprofils (30') und der Tragschiene (20) ein Stützkörper (80) vorgesehen ist, welcher vorzugsweise die gleiche Breite wie der Basissteg (31) des Klemmprofils (30') besitzt.

8. Befestigungsvorrichtung nach Anspruch 7, **dadurch gekennzeichnet, dass** der Basissteg (31) des endseitigen Klemmprofils (30') an der Unterseite (36) keilförmig ausgebildet ist, nämlich ausgehend von dem Schenkel (32), der am Modul (10) anliegt, bis zu dem außenliegenden Schenkel (33) eine zunehmende Dicke zeigt.

9. Befestigungsvorrichtung nach Anspruch 8, **dadurch gekennzeichnet, dass** zur besseren Fixierung des Stützkörpers (80) an der Außenseite des endseitigen Klemmprofils (30') ein nach unten gerichteter, die Unterseite (36) des Basisstegs (31) überragender Klemmsteg (37) vorgesehen ist, vorzugsweise angeformt ist.

10. Befestigungsvorrichtung nach Anspruch 8 oder 9, **dadurch gekennzeichnet, dass** der Stützkörper (80) eine Durchgangsbohrung (81) für die Befestigungsschraube (40)besitzt.

11. Befestigungsvorrichtung nach einem der Ansprüche 1 bis 10, **dadurch gekennzeichnet, dass** die Tragschiene (20) eine stranggepresste Profilschiene aus Metall oder Kunststoff, vorzugsweise aus Aluminium, ist.

12. Befestigungsvorrichtung nach Anspruch 11, **dadurch gekennzeichnet, dass** die Tragschiene (20) zwei in Längsrichtung der Tragschiene (20) verlaufende hinterschnittene Nuten (21, 21') besitzt, die gegenüberliegend an der Tragschiene (20) vorgesehen sind, wobei die untere Nut (21') zur Aufnahme von Verbindungselementen für eine Verbindung der Tragschiene (20) mit einer Unterkonstruktion, insbesondere mit einem Dachhaken (70), vorgesehen ist.

13. Befestigungsvorrichtung nach einem der Ansprüche 1 bis 12, **dadurch gekennzeichnet, dass** die Module (10, 10') ungerahmt oder von einem Rahmen umfasst sind.

14. Befestigungsvorrichtung nach Anspruch 13, **dadurch gekennzeichnet, dass** eine Dichtung (39) zwischen einem Haltesteg (34, 35) und einem Modul (10, 10'), vorzugsweise einem ungerahmten Modul (10, 10'), vorgesehen wird.

15. Befestigungsvorrichtung nach Anspruch 14, **dadurch gekennzeichnet, dass** die Dichtung (39) mit dem Haltesteg (34, 35) des Klemmprofils (30, 30') verbunden ist.
